# DEMANDE DE BREVET EUROPEEN

(11) **EP 1 852 310 A1**
(43) Date de publication de la demande: **07.11.2007**
(21) Numéro de dépôt: 07107373.8
(22) Date de dépôt: 02.05.2007
(51) Int. Cl.: B60R 5/04

(54) **Dispositif cache-bagages pour véhicule automobile, à commande déportée, et véhicule correspondant.**

(30) Priorité: 02.05.2006 FR 0603913
(71) Demandeur: WAGON SAS, 79302 Bressuire Cédex (FR)
(72) Inventeur: Fourel, Pascal, 35400 Saint-Malo (FR); Sandrin, Xavier, 79300 Bressuire (FR)
(74) Mandataire: Bioret, Ludovic

(57) **Abrégé**

L'invention concerne un dispositif cache-bagages pour véhicule automobile, comprenant au moins une toile d'occultation (3) montée sur un tube enrouleur (5) et susceptible d'être déployée au-dessus d'au moins une partie de la surface du coffre dudit véhicule, la toile étant solidarisée à une barre de tirage (4) guidée en coulissement par deux rails (21).

Selon l'invention, le dispositif comprend des moyens de commande déportés du déplacement de la barre de tirage (4) le long des rails (21), mobiles en coulissement et coopérant avec des moyens de démultiplication de façon qu'un déplacement des moyens de commande sur une première distance D1 entraîne un déplacement de la barre de tirage (4) sur une seconde distance D2, supérieure à la longueur D1.

## Description

### 1. Domaine de l'invention

Le domaine de l'invention est celui des équipements intérieurs de véhicules automobiles. Plus précisément, l'invention concerne les dispositifs cache-bagages équipant les coffres de certains véhicules automobiles.

### 2. Solutions de l'art antérieur

On connaît de nombreuses solutions cache-bagages pour véhicules automobiles. Ces cache-bagages peuvent notamment être réalisés à l'aide d'une toile d'occultation. Cette toile peut être montée sur un tube enrouleur de façon à pouvoir se déployer ou s'enrouler selon les besoins. Une cassette contenant le tube enrouleur est le plus souvent fixée au fond du coffre, sur ou à proximité du dossier de la banquette arrière du véhicule. La toile est ensuite déployée pour recouvrir la totalité du coffre du véhicule.

Selon cette approche, quand la toile du cache-bagages est repliée, l'utilisateur, pour la déployer, doit aller saisir une barre de tirage qui se trouve au niveau de la cassette, c'est-à-dire au fond du coffre, au niveau de la banquette arrière. Il est particulièrement malaisé de se pencher pour attraper cette barre de tirage, notamment quand le coffre est de dimension importante. Le déploiement d'un tel cache-bagages est donc une opération inconfortable pour l'utilisateur, particulièrement les utilisateurs de petite taille ou les utilisateurs ayant des difficultés à se pencher.

### 3. Objectifs de l'invention

L'invention a notamment pour objectif de pallier ces inconvénients de l'art antérieur.

Plus précisément, l'invention a pour objectif de fournir un dispositif cache-bagages qui soit facile à déployer et à replier pour l'utilisateur, sans qu'il ait à fournir d'efforts importants, ni à adopter des positions inconfortables.

Un autre objectif de l'invention est de fournir un dispositif simple, efficace et fiable permettant à l'utilisateur de refermer le porte-bagages sans avoir à se pencher dans le coffre et de tirer facilement le cache-bagages vers lui pour le refermer.

Un autre objectif de l'invention est de fournir un tel dispositif cache-bagages discret et peu encombrant.

Encore un autre objectif de l'invention est de fournir un tel dispositif cache-bagages, qui soit relativement peu coûteux à fabriquer, à installer et à mettre en oeuvre.

Encore un autre objectif de l'invention est de fournir un tel dispositif cache-bagages qui puisse être amovible.

### 4. Exposé de l'invention

Ces objectifs, ainsi que d'autres qui apparaîtront par la suite, sont atteints à l'aide d'un dispositif cache-bagages pour véhicule automobile, comprenant au moins une toile d'occultation montée sur un tube enrouleur et susceptible d'être déployée au-dessus d'au moins une partie de la surface du coffre dudit véhicule, ladite toile étant solidarisée à une barre de tirage guidée en coulissement par deux rails.

Selon l'invention, ce dispositif comprend des moyens de commande déportés du déplacement de ladite barre de tirage le long desdits rails, mobiles en coulissement et coopérant avec des moyens de démultiplication de façon qu'un déplacement desdits moyens de commande sur une première distance D1 entraîne un déplacement de ladite barre de tirage sur une seconde distance D2, supérieure à ladite longueur D1.

Ainsi, l'utilisateur peut se servir de ces moyens de commande déportés, par exemple une tirette coulissante, pour fermer et ouvrir le cache-bagages en ramenant vers lui la toile du cache-bagages. Pour refermer entièrement le cache-bagages, il fera coulisser la tirette sur toute la longueur D1.

Selon un mode de réalisation préférentiel, le dispositif comprend au moins une première roue de périmètre P1, mise en rotation par le déplacement desdits moyens de commande, et au moins une seconde roue montée sur le même axe que ladite première roue et présentant un périmètre P2 supérieur à P1, le rapport entre les périmètres P1 et P2 étant sensiblement identique à celui entre les longueurs D1 et D2, ladite barre de tirage étant entraînée par un câble d'entraînement s'enroulant autour de ladite seconde roue. Cette approche permet d'obtenir simplement et efficacement la démultiplication souhaitée.

De façon préférentielle, la première roue est une roue dentée en prise avec une crémaillère, et le déplacement en translation desdits moyens de commande par rapport à ladite crémaillère entraînant la rotation de ladite première roue.

Préférentiellement, les moyens de commande déportés coulissent dans une lumière de longueur D1 formée dans la garniture latérale du coffre, cette lumière s'étendant horizontalement, et se trouvant à portée de l'utilisateur.

De façon avantageuse, le dispositif comprend une cassette amovible contenant le tube enrouleur, de façon à pouvoir enlever le cache-bagages du coffre, en cas de besoin.

Dans ce cas, il est souhaitable de prévoir une désolidarisation des moyens d'actionnement et de la barre de tirage. On peut notamment prévoir que ledit câble d'entraînement entraîne au moins un élément d'accrochage de ladite barre de tirage le long desdits rails, ledit élément d'accrochage étant solidarisable de façon réversible à ladite barre de tirage. Avantageusement, les éléments d'accrochage peuvent se solidariser à ladite barre de tirage par contact avec celle-ci. Ils pourront par exemple être basculants dans le rail et ainsi se solidariser avec la barre de tirage quand ils entrent en contact avec celle-ci.

Selon un mode de réalisation préférentiel, le dispositif comprend des moyens de rappels qui permettent à ces éléments d'accrochage de regagner une position qui correspond à l'ouverture du cache-bagages et permettent ainsi la solidarisation avec la barre de tirage, notamment quand l'utilisateur remet le cache-bagages dans le véhicule. Il peut par exemple s'agir de ressort, ou bien d'une configuration particulière du câble d'entraînement en boucle.

Préférentiellement, on prévoit également des moyens d'équilibrage de ladite barre de tirage de façon à ce qu'elle reste toujours sensiblement perpendiculaire auxdits rails.

Ces moyens sont souhaitables, du fait que les moyens d'actionnement agissent généralement sur une seule extrémité de la barre de tirage.

L'invention concerne également les véhicules automobiles comprenant un dispositif cache-bagages tel que décrit ci-dessus.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une vue partielle d'un coffre de véhicule automobile équipé d'un dispositif cache-bagages selon un mode de réalisation de l'invention ;
- la figure 2 représente de façon schématique le mécanisme d'actionnement du dispositif cache-bagages de la figure 1 ;
- la figure 3 représente de facon schématique un exemple de moyens de solidarisation de la barre de tirage aux moyens d'actionnement, selon un mode de réalisation de l'invention.

### 6. Description détaillée de l'invention

### 6.1 Rappel du principe de l'invention

Le principe général de l'invention repose sur une commande déportée, associée à des moyens de démultiplication, permettant de déployer ou d'enrouler la toile d'un dispositif cache-bagages.

### 6.2 Principe de la commande à démultiplicateur

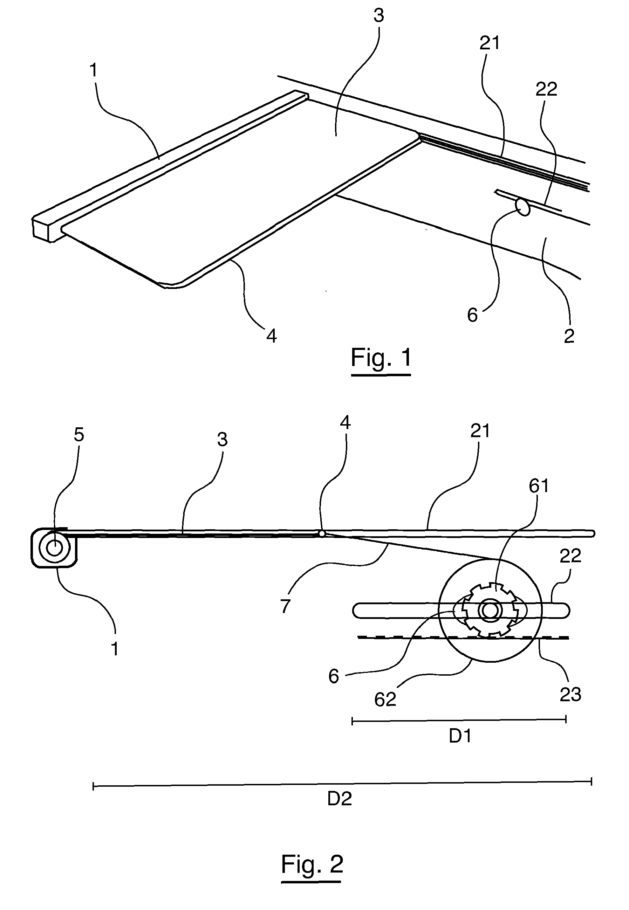

La figure 1 représente un coffre de véhicule automobile équipé d'un dispositif cache-bagages selon un mode de réalisation de l'invention. La figure 2 représente de façon schématique le mécanisme d'actionnement du dispositif cache-bagages correspondant.

Une cassette 1 est fixée à une paroi du coffre 2. De façon habituelle, elle est fixée à proximité du haut de la banquette arrière du véhicule. Cette cassette 1 contient un tube enrouleur 5 sur lequel est montée une toile d'occultation 3. Une barre de tirage 4 est fixée à la toile 3. Les extrémités de cette barre de tirage 4 peuvent coulisser le long de rails 21 (un seul rail étant représenté pour faciliter la lecture de la figure) disposés dans les parois latérales du coffre 2.

Une tirette 6, pouvant coulisser dans une lumière 22 formée dans une paroi du coffre 2, forme une commande déportée du déplacement de la barre de tirage 4 le long des rails 21. La tirette 6 peut coulisser dans la lumière 22 sur une longueur D1 (par exemple 30 cm), alors que les extrémités de cette barre de tirage 4 peuvent coulisser le long des rails 21 sur un longueur D2 (par exemple 100 cm) qui est supérieure à la longueur D1.

Cette tirette 6 est liée à une première roue dentée 61, de périmètre P1, qui est en prise avec une crémaillère 23 solidaire de la paroi du coffre. Le coulissement de la tirette 6 le long de la lumière 22 entraîne donc la rotation de la première roue 61 le long de la crémaillère 23.

La première roue 61 est liée à une seconde roue ou poulie 62, de périmètre P2, qu'elle entraîne en rotation. Un câble 7 s'enroule autour de la poulie 62, et l'extrémité de ce câble 7 est reliée à l'extrémité de la barre de tirage 4. Le câble, en s'enroulant, entraîne donc la barre de tirage 4 dans le rail 21.

Le périmètre P1 de la première roue 61 étant inférieur au périmètre P2 de la poulie, le déplacement de la tirette 6 sur une longueur D1 entraîne l'enroulement sur la poulie 62 d'une longueur de câble supérieure à D1 égale à D1*P2/P1.

La poulie 62 se déplaçant au fur et à mesure de l'enroulement, et le déplacement de la barre de tirage 4 dans le rail 21 ne se faisant pas nécessairement dans la direction de traction du câble 7, la longueur D2 de déplacement de la barre de tirage 4 n'est pas égale à la longueur de câble enroulé au cours de ce déplacement. On pourra cependant évaluer grossièrement, à titre indicatif, que le rapport D1/D2 est sensiblement égal au rapport P1/P2.

### 6.3 Cassette amovible

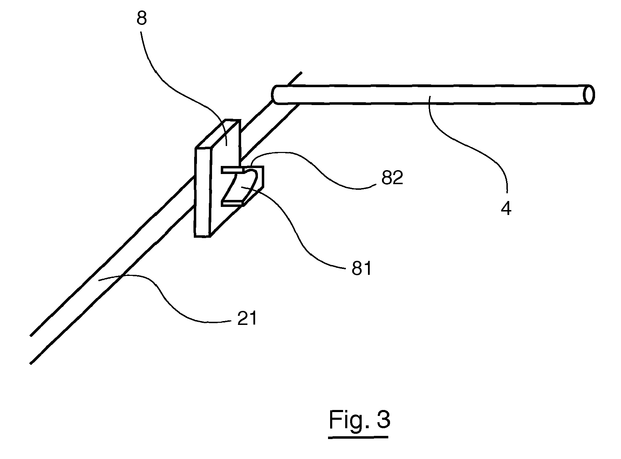

Selon un mode de réalisation particulier de l'invention, représenté sur la figure 3 et permettant de rendre la cassette amovible, la barre de tirage 4 ne coulisse pas directement dans les rails 21. Les extrémités de la barre, dans ce cas, sont maintenues sur des éléments d'attache 81 situés sur des chariots 8 coulissant dans les rails 21. Le câble 7, dans ce cas, entraîne le chariot 8 en coulissement dans le rail 21. Il est ainsi possible, dans ce cas, de décrocher la barre de tirage 4 de l'élément d'attache 81. Dans ce cas, la toile 3 s'enroule autour du tube enrouleur 5, sous l'effet des moyens de rappel qui lui sont associés. La barre de tirage 4 se trouve donc alors à proximité de l'extrémité du rail 21, séparé du point d'attache 81. Cette situation est représentée par la figure 3.

Pour pouvoir actionner de nouveau la barre de tirage 4 à l'aide de la tirette 6, il faut raccrocher la barre de tirage 4 sur le point d'attache 81. Il est possible de le faire en actionnant la tirette 6 de façon à ramener le chariot 8 à l'extrémité du rail 21 proche de la cassette 1. Des moyens d'accrochage, ici constitués par un plan incliné 82 sur le point d'attache 81, permettent alors à la barre de tirage 4 de s'accrocher automatiquement au point d'attache 81.

D'autres moyens de solidarisation / désolidarisation sont bien sûr envisageables, par exemple à l'intérieur des rails.

### 6.4 Autres caractéristiques et avantages

La description et les figures présentent un câble 7 permettant d'actionner la barre de tirage 4 dans une direction. Bien évidemment, des moyens similaires ou des moyens de rappel permettent d'actionner la barre de tirage 4 ou le chariot 8 dans la direction opposée quand on actionne la tirette 6. Des moyens de blocage peuvent également être mis en oeuvre pour bloquer la barre de tirage 4 dans au moins une position, par exemple la position déployée de la toile d'occultation 3 et le cas échéant une ou plusieurs positions intermédiaires.

Un système d'équilibrage peut être mis en oeuvre sur la barre de tirage 4 ou entre les chariots 8 pour que la barre de tirage 4 reste constamment sensiblement perpendiculaire aux rails 21. Ce système d'équilibrage peut par exemple être constitué d'un système de câbles faisant le tour du coffre.

## Revendications

1. Dispositif cache-bagages pour véhicule automobile, comprenant au moins une toile d'occultation (3) montée sur un tube enrouleur (5) et susceptible d'être déployée au-dessus d'au moins une partie de la surface du coffre dudit véhicule, ladite toile étant solidarisée à une barre de tirage (4) guidée en coulissement par deux rails (21),
**caractérisé en ce qu'**il comprend des moyens de commande déportés du déplacement de ladite barre de tirage (4) le long desdits rails (21), mobiles en coulissement et coopérant avec des moyens de démultiplication de façon qu'un déplacement desdits moyens de commande sur une première distance D1 entraîne un déplacement de ladite barre de tirage (4) sur une seconde distance D2, supérieure à ladite longueur D1.

2. Dispositif cache-bagages selon la revendication 1, **caractérisé en ce qu'**il comprend au moins une première roue (61) de périmètre P1, mise en rotation par le déplacement desdits moyens de commande, et au moins une seconde roue (62) montée sur le même axe que ladite première roue (61) et présentant un périmètre P2 supérieur à P1, le rapport entre les périmètres P1 et P2 étant sensiblement identique à celui entre les longueurs D1 et D2, et **en ce que** ladite barre de tirage (4) est entraînée par un câble d'entraînement (7) s'enroulant autour de ladite seconde roue (62).

3. Dispositif cache-bagages selon la revendication 2, **caractérisé en ce que** ladite première roue (61) est une roue dentée en prise avec une crémaillère (23), le déplacement en translation desdits moyens de commande par rapport à ladite crémaillère (23) entraînant la rotation de ladite première roue (61).

4. Dispositif cache-bagages selon l'une quelconque des revendications 1 à 3, **caractérisé en ce que** lesdits moyens de commande déportés coulissent dans une lumière (22) de longueur D1 formée dans la garniture latérale du coffre, ladite lumière (22) s'étendant sensiblement horizontalement.

5. Dispositif cache-bagages selon l'une quelconque des revendications 1 à 4, **caractérisé en ce qu'**il comprend une cassette amovible contenant ledit tube enrouleur.

6. Dispositif cache-bagages selon l'une quelconque des revendications 2 et 3, **caractérisé en ce que** ledit câble d'entraînement (7) entraîne au moins un élément d'accrochage (81) de ladite barre de tirage (4) le long desdits rails (21), ledit élément d'accrochage (81) étant solidarisable de façon réversible à ladite barre de tirage (4).

7. Dispositif cache-bagages selon la revendication 6, **caractérisé en ce que** le ou lesdits éléments d'accrochage (81) peuvent se solidariser à ladite barre de tirage (4) par contact avec celle-ci.

8. Dispositif cache-bagages selon l'une quelconque des revendications 6 et 7, **caractérisé en ce qu'**il comprend des moyens de rappel agissant sur lesdits éléments d'accrochage (81).

9. Dispositif cache-bagages selon l'une quelconque des revendications 1 à 8, **caractérisé en ce qu'**il comprend des moyens d'équilibrage de ladite barre de tirage (4) de façon à ce que qu'elle reste toujours sensiblement perpendiculaire auxdits rails (21).

10. Véhicule automobile **caractérisé en ce qu'**il comprend un dispositif cache-bagages selon l'une quelconque des revendications 1 à 9, comprenant au moins une toile d'occultation montée sur un tube enrouleur et susceptible d'être déployée au-dessus d'au moins une partie de la surface du coffre dudit véhicule, ladite toile étant solidarisée à une barre de tirage guidée en coulissement par deux rails, et des moyens de commande déportés du déplacement de ladite barre de tirage le long desdits rails, mobiles en coulissement et coopérant avec des moyens de démultiplication de façon qu'un déplacement desdits moyens de commande sur une première distance D1 entraîne un déplacement de ladite barre de tirage sur une seconde distance D2, supérieure à ladite longueur D1.
